# EUROPEAN PATENT SPECIFICATION

(11) **EP 3 667 466 B1**
(45) Date of publication and mention of the grant of the patent: **07.09.2022**
(21) Application number: 18842894.0
(22) Date of filing: 15.06.2018
(51) Int. Cl.: B32B 7/035, B32B 3/08, B32B 7/12, B32B 27/08, B32B 27/30, B32B 27/36, G06F 3/044

(54) **INPUT DEVICE AND MANUFACTURING METHOD FOR INPUT DEVICE IN WHICH PLASTIC COVER AND FILM SENSOR ARE STACKED**
EINGABEVORRICHTUNG UND HERSTELLUNGSVERFAHREN FÜR EINE EINGABEVORRICHTUNG MIT STAPEL AUS KUNSTSTOFFABDECKUNG UND FILMSENSOR
DISPOSITIF D'ENTRÉE ET PROCÉDÉ DE FABRICATION POUR DISPOSITIF D'ENTRÉE DANS LEQUEL UN COUVERCLE EN PLASTIQUE ET UN CAPTEUR DE FILM SONT EMPILÉS

(30) Priority: 07.08.2017 JP 2017152389
(43) Date of publication of application: 17.06.2020
(73) Proprietor: Alps Alpine Co., Ltd., Ota-ku, Tokyo 1458501 (JP)
(72) Inventor: SASAGAWA, Hideto, Tokyo 145-8501 (JP); ASAKAWA, Takashi, Tokyo 145-8501 (JP); OSAKA, Takefumi, Tokyo 145-8501 (JP); TAKASHIMA, Yutaka, Tokyo 145-8501 (JP)
(74) Representative: Maiwald Patent- und Rechtsanwaltsgesellschaft mbH
(86) International application number: PCT/JP2018/022895
(87) International publication number: WO 2019/031060

(56) References cited:
- JP-A- 2014 015 035
- JP-A- 2015 191 347
- JP-A- 2016 126 469
- JP-A- 2016 126 469
- US-A- 3 684 635
- US-A1- 2013 063 684

## Description

### Technical Field

The present invention relates to an input device and a method for manufacturing an input device in which a plastic cover and a film sensor are laminated.

### Background Art

Capacitive touch panels that sense capacitance are used as input devices for use in mobile terminals and various electronic apparatuses.

PTL 1 describes a touch panel made of a film base material, which is less prone to thermal deformation during manufacturing. The touch panel has a configuration in which two film base materials with a transparent conductive layer composed of the same material and having the same thickness are laminated so that the film forming directions form 90 degrees.

PTL 2 describes a touch panel in which two sensor films are laminated so that their lengthwise directions (machine directions [MDs]) cross at right angles to cancel the birefringence of the sensor films.

Japanese patent application JP 2016 126469 A describes a touch panel with a first resin film, a first detection electrode formed on the first resin film and a second resin film disposed to face the first resin film. The touch panel further comprises a second detection electrode and a third resin film having a retardation value of 3000 nm or more. The first and second resin film are arranged such that their contraction directions coincide with each other.

US patent application US 2013/0063684 A1 describes a device comprising a touch sensor and a display. The touch sensor panel has one or more substrate layers and the display emits linearly polarized light towards the touch sensor panel. At least one of the substrate layers in the touch sensor panel is formed from a film that introduces optical retardation to the light as it passes through the touch sensor panel. Japanese patent application JP 2014 015035 A describes a multilayer transparent base material formed by laminating three or more sheets, all of which have a retardation of 3000 nm or more.

### Citation List

### Patent Literature

PTL 1: Japanese Unexamined Patent Application Publication No. 2013-41446
PTL 2: US Patent Application Publication No. 2012/0268914

### Summary of Invention

### Technical Problem

The touch panels described in PTLs 1 and 2 have a configuration in which the film base material forming directions (lengthwise directions) cross at right angles to reduce the anisotropy of the film base materials. However, in these touch panels, the relationship between the film forming directions of the plurality of film base materials composed of the same material and having the same thickness is specified, but the directions of arrangement of the film base materials in relation to other members are not studied.

Furthermore, PTLs 1 and 2 do not describe problems in the case where the touch panels are used under a high-temperature environment. For example, car navigation touch panels can have appearance and functional problems when exposed to high temperature. However, the problems that can occur in such a high-temperature environment are not described.

An object of the present invention is to provide an input device whose appearance and functions can be kept well under a high-temperature environment and in which degradation in design and nonuniformity in sensitivity are suppressed. Another object of the present invention is to provide a method for manufacturing an input device in which a plastic cover and a film sensor are laminated.

### Solution to Problem

The inventors have found that an input device in which a plastic cover and a film sensor are laminated warps greatly under a high-temperature environment in the case where the resin flowing direction of the film sensor and the resin flowing direction of the plastic cover are parallel to each other. The present invention is based on this finding and has the following configuration.

An input device according to the present invention includes a plastic cover and a film sensor laminated together. A resin flowing direction MD1 of the plastic cover and a resin flowing direction MD2 of the film sensor are nonparallel to each other in plan view in a laminating direction.

This prevents warping under a high-temperature environment.

Preferably, the resin flowing direction MD1 and the resin flowing direction MD2 cross at right angles in the viewpoint of preventing warping under a high-temperature environment.

The input device according to the present invention may include a casing joined to the plastic cover. In this case, the casing preferably has a frame shape in plan view in the laminating direction and is joined to a periphery of the plastic cover.

Preventing the warping under a high-temperature environment allows the plastic cover and the casing to be kept joined.

A method for manufacturing an input device including a plastic cover and a film sensor laminated together includes the step of laminating the plastic cover and the film sensor so that a resin flowing direction MD1 and a resin flowing direction MD2 are nonparallel to each other.

This allows stably manufacturing an input device whose appearance and functions are maintained well under a high-temperature environment.

In the method for manufacturing the input device including the plastic cover and the film sensor laminated together according to the present invention, the resin flowing direction MD1 of the plastic cover is, for example, an extruding direction in manufacturing a plastic base material of the plastic cover, and the resin flowing direction MD2 of the film sensor is, for example, a roll drawing direction in manufacturing a film base material of the film sensor.

### Advantageous Effects of Invention

The present invention provides an input device in which a plastic cover and a film sensor are laminated and in which problems in appearance and function under a high-temperature environment are suppressed. The present invention also provides a method for manufacturing an input device in which a plastic cover and a film sensor are laminated.

### Brief Description of Drawings

[Fig. 1(a)] Fig. 1(a) is a perspective view of a touch panel according to the present embodiment, schematically illustrating the relationship between the resin flowing direction MD1 of a plastic cover and the resin flowing direction MD2 of a film sensor.
[Fig. 1(b)] Fig. 1(b) is a schematic diagram illustrating the relationship between MD1 and MD2 in plan view in the laminated direction of the touch panel.
[Fig. 2(a)] Fig. 2(a) is a perspective view schematically illustrating a state before the touch panel is mounted to a casing.
[Fig. 2(b)] Fig. 2(b) is a perspective view schematically illustrating a state in which the touch panel is mounted to the casing.
[Fig. 3] Fig. 3 is a cross-sectional view of the touch panel mounted to the casing taken along A-A' in Fig. 2(b).
[Fig. 4] Fig. 4 is a cross-sectional view illustrating a state in which the touch panel in Fig. 3 is peeled from the casing because of warping.
[Fig. 5] Fig. 5 is a graph showing the results of high-temperature (95°C) environmental testing.
[Fig. 6] Fig. 6 is a graph showing the results of high-temperature-high-humidity (85°C, 85%) environmental testing. Description of Embodiments

An input device according to an embodiment of the present invention will be described hereinbelow with reference to the drawings.

Components with the same functions as those of described components are denoted by the same reference signs, and descriptions thereof will be omitted as appropriate.

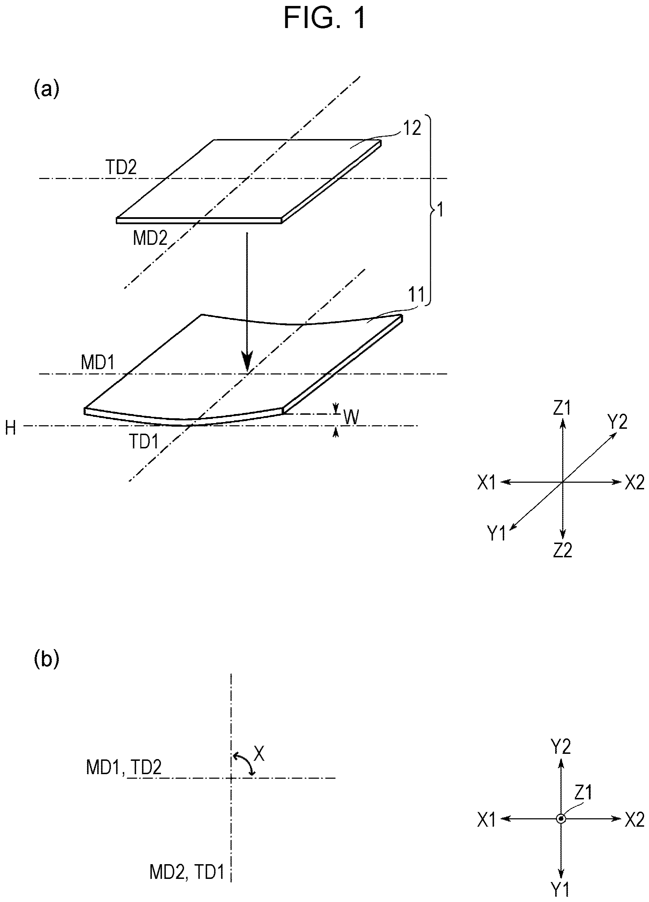

A form in which the input device of the present invention is embodied as a capacitive touch panel will be described hereinbelow. Fig. 1(a) is a perspective view of a touch panel 1 according to the present embodiment, schematically illustrating the relationship between the resin flowing direction MD1 of a plastic cover 11 (hereinafter referred to as "MD1" or "MD1 direction" as appropriate) and the resin flowing direction MD2 of a film sensor 12 (hereinafter referred to as "MD2" or "MD2 direction" as appropriate). Fig. 1(b) is a schematic diagram illustrating the relationship between the MD1 direction and the MD2 direction in plan view in the laminated direction.

As illustrated in the diagrams, the plastic cover 11 and the film sensor 12 constituting the touch panel 1 are laminated so that the straight line indicating the MD1 direction of the plastic cover 11 and the straight line indicating the MD2 direction of the film sensor 12 cross at right angles in plan view in the laminated direction (Z1-Z2 direction), that is, the angle X formed by the two directions is 90 degrees.

The plastic cover 11 is manufactured by extrusion molding a plastic base material, such as a polycarbonate resin (PC) or an acrylic resin (polymethyl methacrylate [PMMA]). In this case, the resin flowing direction of the plastic cover 11 is the extruding direction. The resin flowing direction can be confirmed by measuring the birefringence distribution of the plastic cover 11. The plastic cover 11 manufactured by extrusion molding tends to warp along the extruding direction (MD1 direction), as illustrated in Fig. 1(a). For example, the plastic cover 11 under a high-temperature environment warps to draw an arc along the MD1 direction. The diagram illustrates a case in which the plastic cover 11 is warped so as to draw an arc protruding in the Z2-direction along the MD1 direction.

The plastic cover 11 may be a single-layer cover composed of one kind of plastic base material or a two-layer cover composed of two kinds of plastic base material laminated together. If the plastic cover 11 is composed of two layers, a PMMA layer and a PC layer, warping tends to occur in a direction in which the PMMA surface protrudes. The plastic cover 11 may have any thickness but normally has a thickness of about 1.0 mm to 3.0 mm, and preferably has a thickness of about 1.5 mm to 2.0 mm.

The film sensor 12 is a film having a function for sensing capacitance. For example, the film sensor 12 is configured such that an electrode layer (not illustrated) and so on are disposed on a film base material layer manufactured by forming a light-transmissive polyethylene terephthalate (PET) film by drawing. In this case, the resin flowing direction MD2 of the film sensor 12 (film base material layer) is the drawing direction. The resin flowing direction can be confirmed by measuring the birefringence distribution of the film base material layer. The film sensor 12 tends to contract in the direction of drawing during manufacture (the roll direction, the vertical direction, or the MD2 direction) under a high-temperature environment. The coefficient of linear expansion of the film sensor 12 in the MD2 direction depends on the kind of resin constituting the film sensor 12, the condition of manufacture, and so on. For example, the coefficient of linear expansion of a PET film is generally about 1.2 × 10⁻⁵. The film sensor 12 may have any thickness but normally has a thickness of 200 µm or less, and preferably has a thickness of 100 µm or less.

As illustrated in Figs. 1(a) and 1(b), the touch panel 1 has its film sensor 12 laminated on the plastic cover 11 in such a manner that the MD2 is orthogonal to the MD1. Therefore, the MD1 of the plastic cover 11 is parallel to the transverse direction (TD) (the direction crossing the flow of the resin) 2 of the film sensor 12, and the MD2 of the film sensor 12 is parallel to the TD1 of the plastic cover 11. This configuration allows the film sensor 12 to suppress the warping of the plastic cover 11 in the MD1 direction and the plastic cover 11 to suppress the contraction of the film sensor 12 in the MD2 direction under a high-temperature environment.

The angle X between the MD1 direction and the MD2 direction of the touch panel 1 is 90 degrees. This allows effectively preventing the warping of the plastic cover 11 in the MD1 direction and the contraction of the film sensor 12 in the MD2 direction. However, laminating them such that the MD1 direction and the MD2 direction cross or are nonparallel provides the effect of preventing the warping of the plastic cover 11 and the contraction of the film sensor 12. Therefore, the above effect can be obtained even if the angle X (Fig. 1(b) is not 90 degrees. The angle X is preferably from 45 degrees to 135 degrees, and more preferably from 80 degrees to 100 degrees in the viewpoint of effectively preventing the warping and contraction.

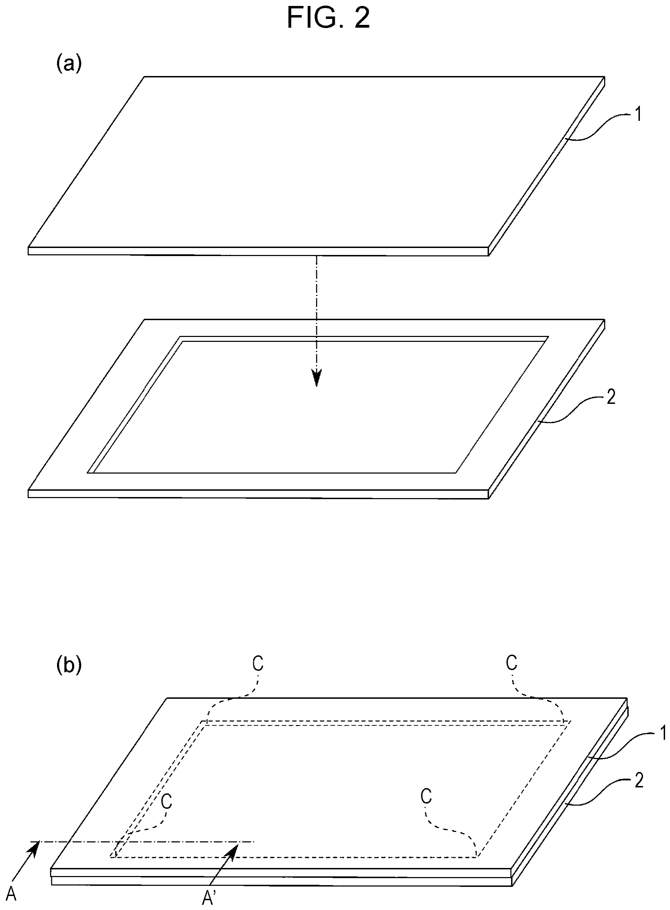

As illustrated in Figs. 2(a) and 2(b), the touch panel 1 is joined (bonded) to a frame-like casing 2 enclosing the periphery thereof.

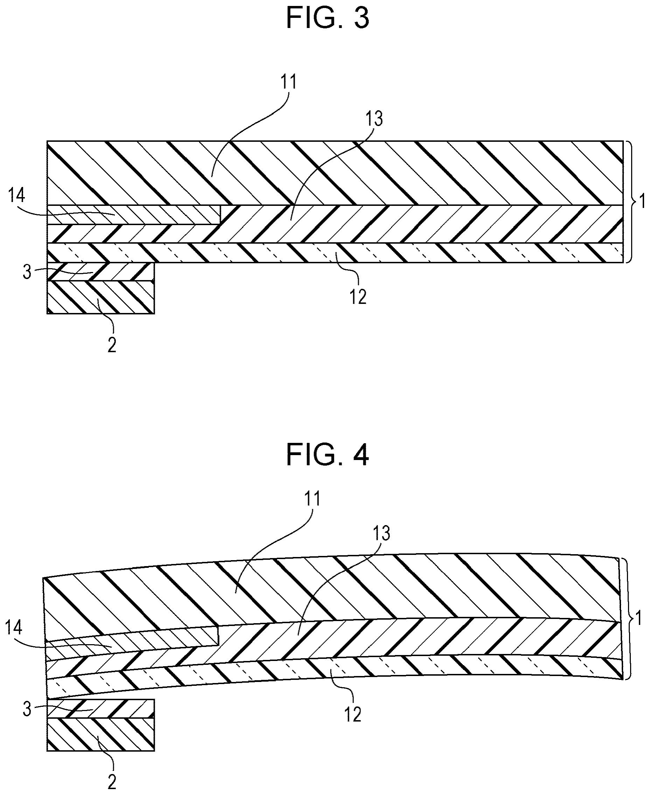

Fig. 3 is a cross-sectional view taken along A-A' in Fig. 2(b). As illustrated in the diagram, the film sensor 12 of the touch panel 1 is joined at one surface to the casing 2 with an adhesive layer 3 therebetween, and joined at the other surface to the plastic cover 11 with an optical transparent adhesive layer 13 (an optical clear adhesive [OCA]) therebetween. The optical transparent adhesive layer 13 is composed of, for example, acrylic adhesive, and has a thickness of about 25 µm to 200 µm. A decorative layer 14 is disposed between the plastic cover 11 and the film sensor 12.

Fig. 4 illustrates a state in which the touch panel 1 is peeled from the casing 2 because of warping. The use under a high-temperature environment causes a force in a direction in which the touch panel 1 warps, that is, a direction in which the touch panel 1 and the casing 2 are separated. When the force becomes large and the state bonded by the adhesive layer 3 cannot be maintained, the touch panel 1 peels from the casing 2, advancing the warping. The peeling tends to occur from the vicinity of the corners C of the touch panel 1 (see Fig. 2(b)).

The occurrence of peeling itself is a problem in the viewpoint of appearance, but if the warping of the touch panel 1 is advanced by peeling, the appearance (design) of the touch panel 1 may be further deteriorated. For example, if the warping applies stress to the decorative layer 14 disposed on the periphery of the touch panel 1, its appearance may become nonuniform.

The warping of the touch panel 1 may also cause functional problems. For example, if the force applied to the film sensor 12 becomes nonuniform because of warping, the sensitivity distribution may become nonuniform. Furthermore, air bubbles can be generated between the plastic cover 11 and the film sensor 12. In this case, the sensitivity distribution of the touch panel 1 becomes more nonuniform because the dielectric constant of the film sensor 12 depends on whether there are air bubbles.

For this reason, as illustrated in Fig. 1, the touch panel 1 is configured such that the resin flowing direction MD1 of the plastic cover 11 and the resin flowing direction MD2 of the film sensor 12 cross or are nonparallel to each other. This allows the film sensor 12 to suppress the warping of the plastic cover 11 under a high-temperature environment, thereby maintaining the state in which the touch panel 1 and the casing 2 are joined.

The present invention may also be embodied as a method of manufacture including the step of laminating the plastic cover 11 and the film sensor 12 so that the resin flowing direction MD1 and the resin flowing direction MD2 cross or are nonparallel. Lamination such that MD1 and MD2 cross or are nonparallel allows the warping of the plastic cover 11 under a high-temperature environment to be prevented by the film sensor 12.

For example, the resin flowing direction MD1 of the plastic cover is an extruding direction in manufacturing the plastic base material of the plastic cover. For example, the resin flowing direction MD2 of the film sensor is a roll stretching direction in manufacturing the film base material of the film sensor. In this case, lamination such that MD1 and MD2 cross or are nonparallel allows the warping of the plastic cover 11 under a high-temperature environment to be prevented by the film sensor 12.

Accordingly, the method of manufacture including the lamination step described above allows stably manufacturing the touch panel 1 in which the frame-shaped casing 2 is joined to the periphery of the plastic cover 11, which maintains the joined state under a high-temperature environment so that no peeling occurs.

### EXAMPLES

The following shows the results of environmental testing of the plastic cover 11, the film sensor 12, and the touch panel 1 in which they are laminated under a high-temperature environment (95°C) and a high-temperature, high-humidity environment (85°C, relative humidity: 85%).

### (EXAMPLE)

### (Method of Measurement)

Environmental condition (atmosphere): high temperature (95°C), high temperature-high humidity (85°C, relative humidity: 85%)
Storage time: 120 hours, 240 hours
Measurement: The specimen was stored under a predetermined environment for a predetermined time, then it was left at room temperature for two hours for cooling, and was thereafter measured. The specimen was placed on a horizontal plane H. The distance of the highest portion in side view from the horizontal plane H was set as the size of the warp, W (see Fig. 1(a)).

### (Measurement Specimen)

Orthogonally laminated touch panel: The plastic cover and the film sensor were laminated so that the MD1 direction and the MD2 direction cross at right angles in plan view in the laminating direction (angle X = 90 degrees, see Fig. 1(b)).
Plastic cover: two kinds, two layers (PMMA/PC), 9 inch (200 × 125 mm, thickness t: 2 mm)
Film sensor: PET, 9 inch (200 × 125 mm, thickness t: 50 µm)
Frame-shaped casing: PC, 9 inch (200 × 125 mm, thickness t: 2 mm, frame width: 5 to 30 mm)
Adhesive layer: acrylic

### (COMPARATIVE EXAMPLE)

### (Method of Measurement)

Environmental condition (atmosphere): high temperature (95°C), high temperature-high humidity (85°C, relative humidity: 85%)
Storage time: 120 hours, 240 hours
Measurement: The specimen was stored under a predetermined environment for a predetermined time, then it was left at room temperature for two hours for cooling, and was thereafter measured. The specimen was placed on a horizontal plane H. The distance of the highest portion in side view from the horizontal plane H was set as the size of the warp, W (see Fig. 1(a)).

### (Measurement Specimen)

Plastic cover: two kinds, two layers (PMMA/PC), 9 inch (200 × 125 mm, thickness t: 2 mm)
Film sensor: PET, 9 inch (200 × 125 mm, thickness t: 50 µm)
Parallel laminated touch panel: The plastic cover and the film sensor were laminated so that the MD1 direction and the MD2 direction are parallel in plan view in the laminating direction (angle X = 0 degrees, see Fig. 1(b)).

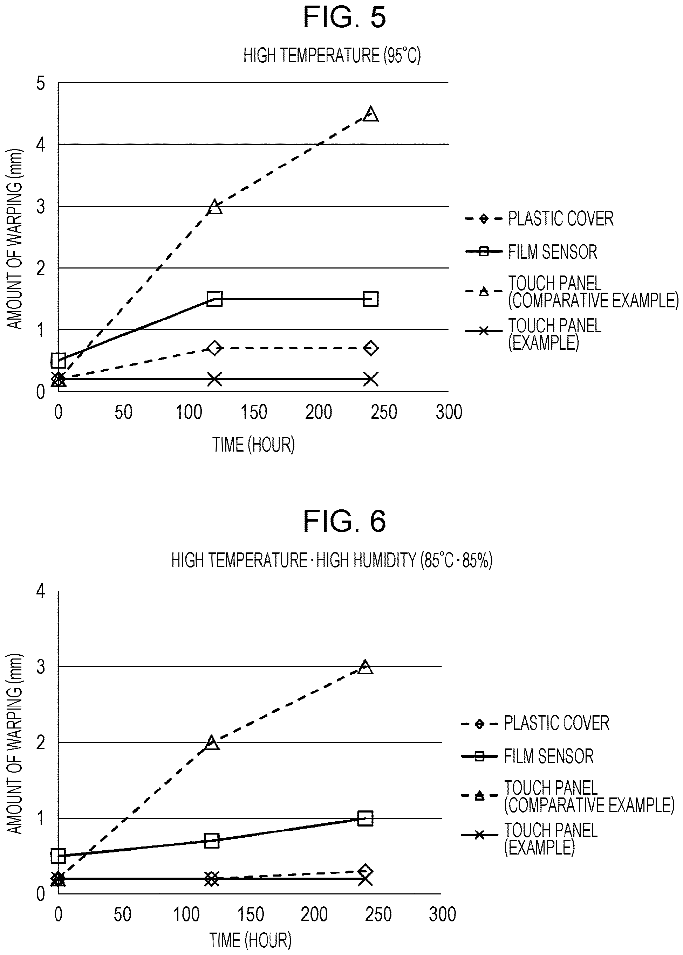

Table 1 and Figs. 5 to 6 show the results of measurement of the sizes of the warps of the individual specimens after environmental testing under a high-temperature and a high-temperature, high-humidity environment (atmosphere).

### <High-Temperature (95°C) Environment>

**[Table 1]**

| Warping (mm) | Plastic cover | Film sensor | Touch panel | |
|---|---|---|---|---|
| | | | Example | Comparative example |
| Initial stage | 0.2 | 0.5 | 0.2 | 0.2 |
| 120 hours | 0.7 | 1.5 | 0.2 | 3.0 |
| 240 hours | 0.7 | 1.5 | 0.2 | 4.5 |

As shown in Table 1 and Fig. 5, the touch panel of the comparative example in which the plastic cover and the film sensor are laminated so that the MD1 direction and the MD2 direction are parallel was warped because it was stored under a high-temperature environment. The amount of warping of the touch panel was larger than the total amount of the warping of the plastic cover and the film sensor evaluated separately. Thus, when the plastic cover and the film sensor were laminated so that the MD1 direction and the MD2 direction are parallel to each other, the amount of warping of the touch panel was large due to their synergistic action.

As shown in Table 1 and Fig. 5, the touch panel of the example in which the plastic cover and the film sensor are laminated so that the MD1 direction and the MD2 direction cross at right angles (the orthogonally laminated touch panel) maintained the initial amount of warping, having no change, even stored under a high-temperature environment.

The same evaluation was made on input devices in which the periphery of the orthogonally laminated touch panel of the example is joined to a frame-shaped casing whose outer shape is the same as that of the touch panel in plan view in the laminating direction. Three input devices including the touch panel and the casing were produced and tested under a high-temperature environment. As a result, no peeling occurred in any of the three input devices.

Thus, laminating the plastic cover and the film sensor so that the MD1 direction and the MD2 direction are not parallel prevented large warping under a high-temperature environment, providing an input device having no appearance and functional problems.

### <High-Temperature, High-Humidity (85°C, 85%) Environment>

**[Table 2]**

| Warping (mm) | Plastic cover | Film sensor | Touch panel | |
|---|---|---|---|---|
| | | | Example | Comparative example |
| Initial stage | 0.2 | 0.5 | 0.2 | 0.2 |
| 120 hours | 0.2 | 0.7 | 0.2 | 2.0 |
| 240 hours | 0.3 | 1.0 | 0.2 | 3.0 |

As illustrated in Table 2 and Fig. 6, the results of the comparative example under a high-temperature, high-humidity environment showed that laminating the plastic cover and the film sensor so that the MD1 direction and the MD2 direction are parallel to each other causes large warping of the touch panel, similarly to the case under a high-temperature environment.

In the conventional manufacture of a touch panel including a plastic cover and a film sensor, the laminating direction thereof (the angle X between MD1 and MD2, see Fig. 1(b)) has not been taken into consideration. For this reason, the touch panels manufactured by the conventional method of manufacture include touch panels in which the laminating directions are parallel (angle X = 0 degrees), possibly causing problems in appearance and function of the parallel laminated touch panel under a high-temperature environment.

As shown in Table 2 and Fig. 6, the touch panel of the example in which the plastic cover and the film sensor are laminated so that the MD1 direction and the MD2 direction cross at right angles (the orthogonally laminated touch panel) maintained the initial amount of warping, having no change, even stored under a high-temperature, high-humidity environment.

The same evaluation was made on input devices in which the periphery of the orthogonally laminated touch panel is joined to a frame-shaped casing whose outer shape is the same as that of the touch panel in plan view in the laminating direction. Three input devices including the touch panel and the casing were produced and tested under a high-temperature, high-humidity environment. As a result, no peeling occurred in any of the three input devices.

Thus, laminating the plastic cover and the film sensor so that the MD1 direction and the MD2 direction are not parallel prevented large warping under a high-temperature, high-humidity environment, providing an input device having no appearance and functional problems.

Thus, laminating the plastic cover and the film sensor so that the resin flowing direction MD1 and the resin flowing direction MD2 are not parallel prevents the touch panel from warping under a high-temperature environment and a high-temperature, high-humidity environment, allowing stably manufacturing a touch panel with high appearance and functional reliability and an input device including such a touch panel.

### Industrial Applicability

An input device according to the present invention is not degraded in design and does not become nonuniform in input sensitivity due to warping under a high-temperature environment, so that the appearance and functions can be well maintained. The input device is therefore useful for an input device installed in a possibly high-temperature environment, such as a touch panel for car navigation. Reference Signs List
1: TOUCH PANEL
2: CASING
3: ADHESIVE LAYER
11: PLASTIC COVER
12: FILM SENSOR
13: OPTICAL TRANSPARENT ADHESIVE LAYER
14: DECORATIVE LAYER
C: CORNER
MD1: RESIN FLOWING DIRECTION OF PLASTIC COVER
MD2: RESIN FLOWING DIRECTION OF FILM SENSOR
TD1: TRANSVERSE DIRECTION OF PLASTIC COVER WITH RESPECT TO RESIN FLOWING DIRECTION
TD2: TRANSVERSE DIRECTION OF FILM SENSOR WITH RESPECT TO RESIN FLOWING DIRECTION
X: ANGLE
H: HORIZONTAL PLANE
W: AMOUNT OF WARPING

## Claims

1. An input device comprising a plastic cover (11) and a film sensor (12) laminated together in a laminating direction with an optical transparent adhesive layer therebetween,
wherein a resin flowing direction MD1 of the plastic cover (11) is an extruding direction in manufacturing a plastic base material of the plastic cover (11),
wherein the film sensor (12) comprises an electrode layer disposed on a film base material layer, wherein a resin flowing direction MD2 of the film sensor (12) is a roll drawing direction in manufacturing the film base material layer of the film sensor (12),
wherein a resin constituting the plastic base material is different from a resin constituting the film base material layer,
wherein a thickness of the plastic cover (11) is greater than a thickness of the film sensor (12), and
wherein the resin flowing direction MD1 of the plastic cover (11) and the resin flowing direction MD2 of the film sensor (12) are crossing each other in plan view in the laminating direction.

2. The input device according to Claim 1, wherein the resin flowing direction MD1 and the resin flowing direction MD2 cross at right angles.

3. The input device according to Claim 1 or 2, further comprising a casing (2) joined to the plastic cover (11).

4. The input device according to Claim 3, wherein the casing (2) has a frame shape in plan view in the laminating direction and is joined to a periphery of the plastic cover (11) .

5. A method for manufacturing an input device (1) comprising a plastic cover (11) and a film sensor (12) laminated together, the method comprising the step of:
laminating the plastic cover (11) and the film sensor (12) with an optical transparent adhesive layer therebetween so that a resin flowing direction MD1 and a resin flowing direction MD2 are crossing each other,
wherein the resin flowing direction MD1 of the plastic cover (11) is an extruding direction in manufacturing a plastic base material of the plastic cover (11),
wherein the film sensor (12) comprises an electrode layer disposed on a film base material layer, wherein the resin flowing direction MD2 of the film sensor (12) is a roll drawing direction in manufacturing a film base material of the film sensor (12),
wherein a resin constituting the plastic base material is different from a resin constituting the film base material layer, and
wherein a thickness of the plastic cover (11) is greater than a thickness of the film sensor (12).

## Patentansprüche

1. Eine Eingabevorrichtung, umfassend eine Kunststoffabdeckung (11) und einen Filmsensor (12), die in einer Laminierrichtung mit einer optisch transparenten Klebeschicht dazwischen zusammenlaminiert sind,
wobei eine Harzfließrichtung MD1 der Kunststoffabdeckung (11) eine Extrudierrichtung bei der Herstellung eines Kunststoffgrundmaterials der Kunststoffabdeckung (11) ist,
wobei der Filmsensor (12) eine Elektrodenschicht umfasst, die auf einer Filmgrundmaterialschicht angeordnet ist, wobei eine Harzfließrichtung MD2 des Filmsensors (12) eine Walzenziehrichtung bei der Herstellung der Filmgrundmaterialschicht des Filmsensors (12) ist,
wobei sich ein Harz, aus dem das Kunststoffgrundmaterial besteht, von einem Harz unterscheidet, aus dem die Foliengrundmaterialschicht besteht,
wobei eine Dicke der Kunststoffabdeckung (11) größer ist als eine Dicke des Filmsensors (12), und
wobei sich die Harzfließrichtung MD1 der Kunststoffabdeckung (11) und die Harzfließrichtung MD2 des Filmsensors (12) in Draufsicht in Laminierrichtung kreuzen.

2. Die Eingabevorrichtung nach Anspruch 1, wobei sich die Harzfließrichtung MD1 und die Harzfließrichtung MD2 rechtwinklig kreuzen.

3. Die Eingabevorrichtung nach Anspruch 1 oder 2, ferner umfassend ein Gehäuse (2), das mit der Kunststoffabdeckung (11) verbunden ist.

4. Die Eingabevorrichtung nach Anspruch 3, wobei das Gehäuse (2) in Draufsicht in Laminierrichtung eine Rahmenform aufweist und mit einem Umfang der Kunststoffabdeckung (11) verbunden ist.

5. Ein Verfahren zur Herstellung einer Eingabevorrichtung (1), die eine Kunststoffabdeckung (11) und einen Filmsensor (12) umfasst, die zusammenlaminiert sind, wobei das Verfahren den folgenden Schritt umfasst:
Laminieren der Kunststoffabdeckung (11) und des Filmsensors (12) mit einer optisch transparenten Klebeschicht dazwischen, so dass eine Harzfließrichtung MD1 und eine Harzfließrichtung MD2 einander kreuzen,
wobei die Harzfließrichtung MD1 der Kunststoffabdeckung (11) eine Extrudierrichtung bei der Herstellung eines Kunststoffgrundmaterials der Kunststoffabdeckung (11) ist,
wobei der Filmsensor (12) eine Elektrodenschicht umfasst, die auf einer Filmgrundmaterialschicht angeordnet ist, wobei die Harzfließrichtung MD2 des Filmsensors (12) eine Walzenziehrichtung bei der Herstellung eines Filmgrundmaterials des Filmsensors (12) ist,
wobei sich ein Harz, aus dem das Kunststoffgrundmaterial besteht, von einem Harz unterscheidet, aus dem die Filmgrundmaterialschicht besteht, und
wobei eine Dicke der Kunststoffabdeckung (11) größer ist als eine Dicke des Filmsensors (12).

## Revendications

1. Dispositif d'entrée comprenant un couvercle en plastique (11) et un capteur de film (12) stratifiés ensemble dans une direction de stratification avec une couche adhésive transparente optique entre eux,
dans lequel une direction d'écoulement de résine MD1 du couvercle en plastique (11) est une direction d'extrusion lors de la fabrication d'un matériau de base en plastique du couvercle en plastique (11),
dans lequel le capteur de film (12) comprend une couche d'électrode disposée sur une couche de matériau de base de film, dans lequel une direction d'écoulement de résine MD2 du capteur de film (12) est une direction d'étirage sur rouleau dans la fabrication de la couche de matériau de base de film du capteur de film (12),
dans lequel une résine constituant le matériau de base en plastique est différente d'une résine constituant la couche de matériau de base de film,
dans lequel une épaisseur de couvercle en plastique (11) est supérieure à une épaisseur du capteur de film (12), et dans lequel la direction d'écoulement de résine MD1 du couvercle en plastique (11) et la direction d'écoulement de résine MD2 du capteur de film (12) se coupent dans une vue en plan dans la direction de stratification.

2. Dispositif d'entrée selon la revendication 1, dans lequel la direction d'écoulement de résine MD1 et la direction d'écoulement de résine MD2 se coupent à angle droit.

3. Dispositif d'entrée selon la revendication 1 ou 2, comprenant en outre un boîtier (2) joint au couvercle en plastique (11).

4. Dispositif d'entrée selon la revendication 3, dans lequel le boîtier (2) a une forme de cadre dans une vue en plan dans la direction de stratification et est joint à une périphérie du couvercle en plastique (11).

5. Procédé de fabrication d'un dispositif d'entrée (1) comprenant un couvercle en plastique (11) et un capteur de film (12) stratifiés ensemble, le procédé comprenant l'étape de :
stratification du couvercle en plastique (11) et du capteur de film (12) avec une couche adhésive transparente optique entre eux de sorte qu'une direction d'écoulement de résine MD1 et une direction d'écoulement de résine MD2 se coupent, dans lequel la direction d'écoulement de résine MD1 du couvercle en plastique (11) est une direction d'extrusion lors de la fabrication d'un matériau de base en plastique du couvercle en plastique (11),
dans lequel le capteur de film (12) comprend une couche d'électrode disposée sur une couche de matériau de base de film, dans lequel la direction d'écoulement de résine MD2 du capteur de film (12) est une direction d'étirage sur rouleau lors de la fabrication d'un matériau de base de film du capteur de film (12),
dans lequel une résine constituant le matériau de base en plastique est différente d'une résine constituant la couche de matériau de base de film, et
dans lequel une épaisseur du couvercle en plastique (11) est supérieure à une épaisseur du capteur de film (12).
